# EUROPEAN PATENT APPLICATION

(11) **EP 4 780 123 A1**
(43) Date of publication of application: **22.07.2026**
(21) Application number: 24877559.5
(22) Date of filing: 11.10.2024
(51) Int. Cl.: H04W 74/0816, H04W 76/15, H04W 24/08, H04W 84/12

(54) **METHOD AND DEVICE FOR PERFORMING CHANNEL ACCESS BY SELECTING NON-PRIMARY CHANNEL ON BASIS OF NON-PRIMARY CHANNEL-RELATED INFORMATION IN WIRELESS LAN SYSTEM**

(30) Priority: 12.10.2023 KR 20230136002
(71) Applicant: LG Electronics Inc., Yeongdeungpo-gu Seoul 07336 (KR)
(72) Inventor: CHA, Dongju, Seoul 06772 (KR); JANG, Insun, Seoul 06772 (KR); CHOI, Jinsoo, Seoul 06772 (KR); BAEK, Sunhee, Seoul 06772 (KR); KIM, Geonhwan, Seoul 06772 (KR); YOON, Yelin, Seoul 06772 (KR)
(74) Representative: Jung, Minkyu
(86) International application number: PCT/KR2024/015411
(87) International publication number: WO 2025/080024

(57) **Abstract**

Proposed are a method and a device for performing channel access by selecting a non-primary channel on the basis of non-primary channel-related information in a wireless LAN system. Specifically, a receiving STA receives a management frame from a transmitting STA. The receiving STA performs channel access for a first non-primary channel on the basis of the management frame. The management frame comprises first and second information. The first information is information related to the size of a channel subset dividing the bandwidth of a BSS operating channel of the transmitting STA. The second information is information related to the location of the first non-primary channel which is a reference for performing channel access within one channel subset.

## Description

### TECHNICAL FIELD

This specification relates to a scheme for performing channel access by selecting a non-primary channel based on information on the non-primary channel in a wireless local area network (WLAN) system. More specifically, the present disclosure relates to a method and apparatus for determining a non-primary channel that is a candidate for performing Non-Primary Channel Access (NPCA) by delivering information on a location of a non-primary channel within a channel subset, a channel subset including a non-primary channel for which back-off is performed for the first time and a back-off order for each channel subset, and a timer indicating a timing for switching to another non-primary channel based on transmission or reception failing for the non-primary channel, etc.

### BACKGROUND ART

Next-generation Wi-Fi (e.g., IEEE 802.11be and/or later) aims to support ultra-high reliability when transmitting signals to STAs. To achieve this, various technologies are being considered to support high throughput, low latency, and extended range. For example, a procedure for accessing non-primary channels may be performed.

### DISCLOSURE

### TECHNICAL PROBLEM

This specification proposes a method and apparatus for performing channel access by selecting a non-primary channel based on information on the non-primary channel in a wireless LAN system.

### TECHNICAL SOLUTION

An example of the present disclosure proposes a method for performing channel access by selecting a non-primary channel based on information on the non-primary channel.

The present embodiment may be performed in a network environment where a next-generation WLAN system (Ultra High Reliability (UHR) WLAN system or next Wi-Fi) is supported. The next-generation WLAN system is a WLAN system that improves the 802.11be system and may satisfy backward compatibility with the 802.11be system.

The present embodiment is performed in a receiving STA, and the receiving STA may relate to at least one station (STA). A transmitting STA of the present embodiment may relate to an access point (AP).

The present embodiment proposes a method for performing channel access for a non-primary channel by delivering information on the non-primary channel through a management frame. Specifically, the present embodiment proposes a method for determining a non-primary channel that is a candidate for performing Non-Primary Channel Access (NPCA) by delivering information on a location of a non-primary channel within a channel subset, a channel subset including a non-primary channel for which back-off is performed for the first time and a back-off order for each channel subset, and a timer indicating a timing for switching to another non-primary channel based on transmission or reception failing for the non-primary channel, etc.

A receiving station (STA) receives a management frame from a transmitting STA.

The receiving STA performs channel access for a first non-primary channel based on the management frame.

The management frame includes first and second information.

The first information is information on a size of a channel subset dividing a bandwidth of a Basic Service Set (BSS) operation channel of the transmitting STA (Channel Subset Unit).

For example, based on the first information being configured with 2 bits, based on the first information being set to 0, it indicates that there is no channel subset; based on the first information being set to 1, it indicates that the channel subset is 40MHz; based on the first information being set to 2, it indicates that the channel subset is 80MHz; and based on the first information being set to 3, it indicates that the channel subset is 160MHz.

The second information is information on a location of the first non-primary channel which is a reference for performing the channel access within one channel subset (Secondary Channel Access Channels). The second information may be configured as a bitmap consisting of bits corresponding to each 20MHz channel within the one channel subset, or may be indicated as an index for the each 20MHz channel within the one channel subset. At this time, a size of the bitmap may be determined based on the first information.

For example, based on the channel subset being indicated as 80MHz based on the first information, since the bitmap consists of bits corresponding to each 20MHz channel, it may be a 4-bit bitmap. Based on a non-primary channel serving as a reference for performing channel access within the channel subset being a last 20MHz channel (i.e., a fourth 20MHz channel in an 80MHz subset), the 4-bit bitmap may be set to 0001. For example, the bitmap may be configured in an order from a 20MHz channel of a low frequency to a 20MHz channel of a high frequency (or vice versa). Based on the second information being indicated as an index, based on the second information being set to 0, a non-primary channel within the channel subset may be indicated as a first 20MHz channel; based on the second information being set to 1, a non-primary channel within the channel subset may be indicated as a second 20MHz channel; based on the second information being set to 2, a non-primary channel within the channel subset may be indicated as a third 20MHz channel; and based on the second information being set to 3, a non-primary channel within the channel subset may be indicated as a fourth 20MHz channel.

The location of the first non-primary channel which is a reference for performing the channel access is identically determined for each channel subset based on the first and second information.

The management frame may be a Beacon, a Probe response frame, or a (Re)Association response frame.

For example, the present embodiment proposes a method for determining a non-primary channel within a channel subset based on information on the non-primary channel delivered through a management frame and performing channel access for the non-primary channel.

### ADVANTAGEOUS EFFECTS

According to the method proposed by the present embodiment, STAs performing NPCA may efficiently use a medium or a channel by performing back-off based on a non-primary channel delivered through a management frame among a plurality of non-primary channel candidates to obtain a Transmission Opportunity (TXOP).

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an example of channel access in an 802.11 wireless LAN system.
FIG. 16 illustrates an example of the basic procedure for SCA.
FIG. 17 shows the basic Secondary Channel Access operation process for an STA.
FIG. 18 illustrates an example where BSS channels between APs overlap.
FIG. 19 illustrates an example for a case where a bandwidth of a BSS Operating Channel is 160MHz.
FIG. 20 illustrates an example for a case where a bandwidth of a BSS Operating Channel is 320MHz.
FIG. 21 illustrates an example for SCA based on a bandwidth of a BSS Operating Channel being 320MHz and four channel subsets of an 80MHz unit.
FIG. 22 illustrates an example for SCA based on a bandwidth of a BSS Operating Channel being 320MHz and four channel subsets of an 80MHz unit.
FIG. 23 is a flowchart illustrating the operation of a transmitting device according to the present embodiment.
FIG. 24 is a flowchart illustrating the operation of the receiving apparatus/device according to the present embodiment.
FIG. 25 is a flowchart illustrating a procedure in which a transmitting STA accesses a non-primary channel and receives a PPDU according to the present embodiment.
FIG. 26 is a flowchart illustrating a procedure in which a receiving STA accesses a non-primary channel and transmits a PPDU according to the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

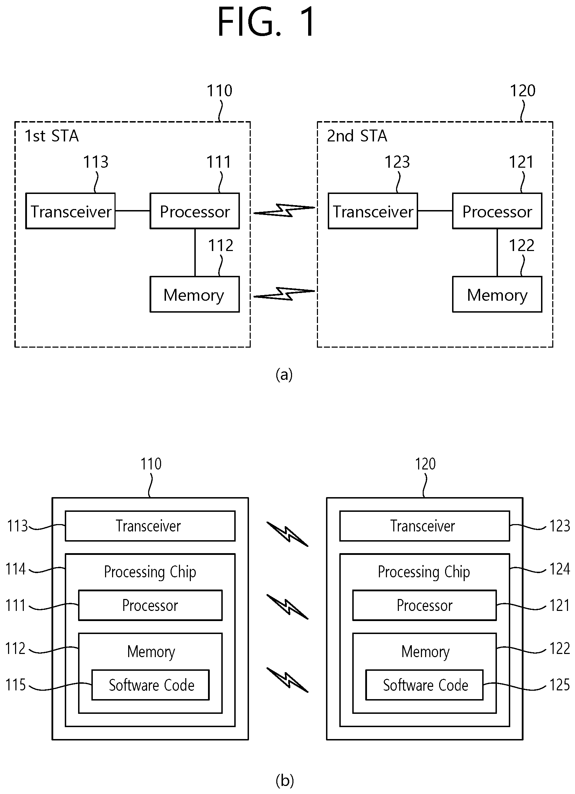

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

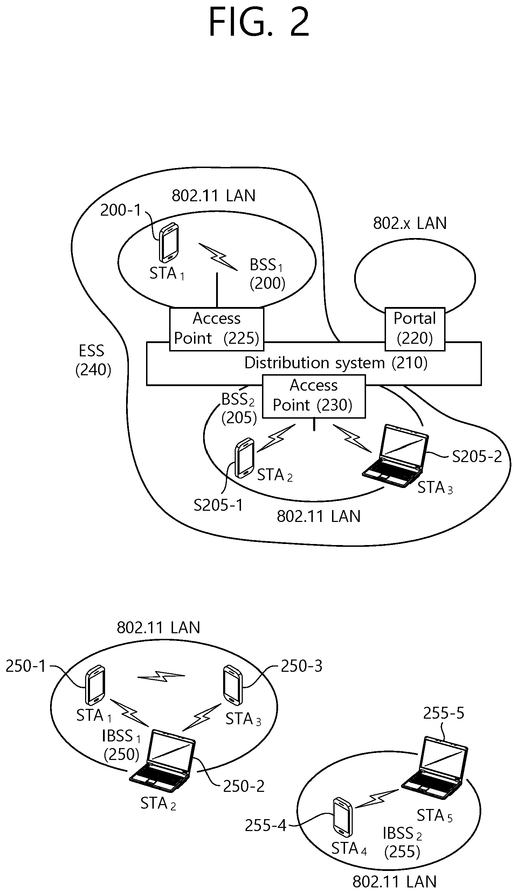

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

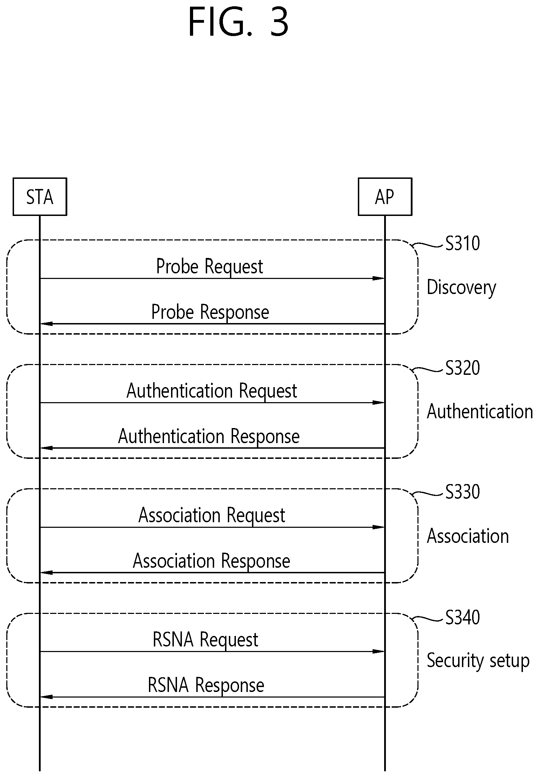

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

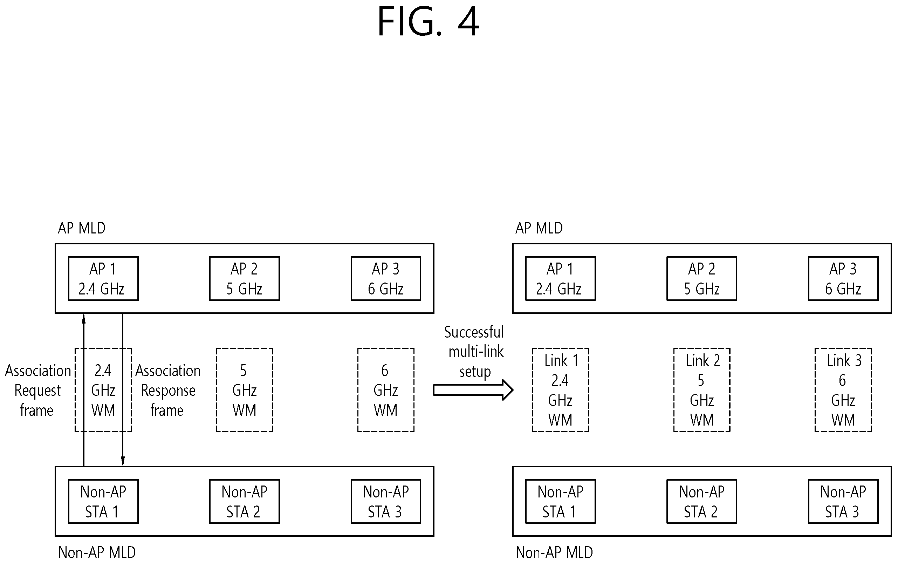

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

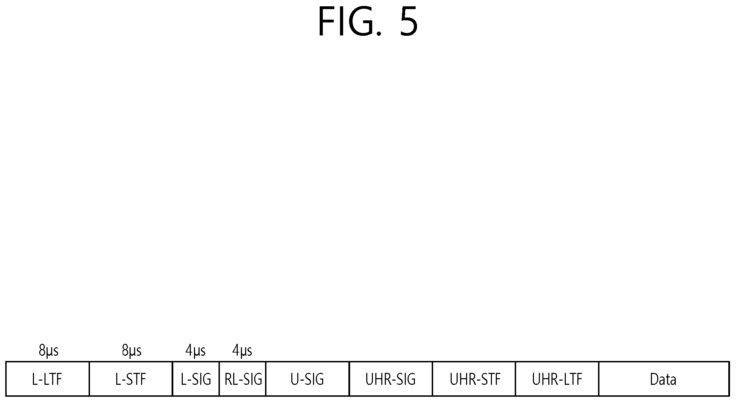

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

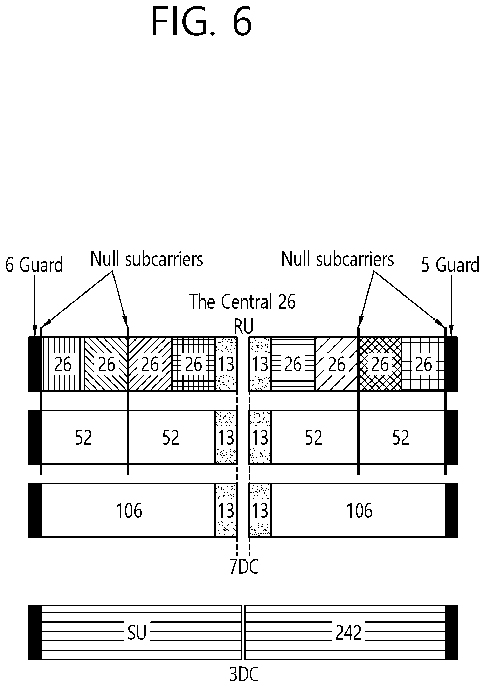

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

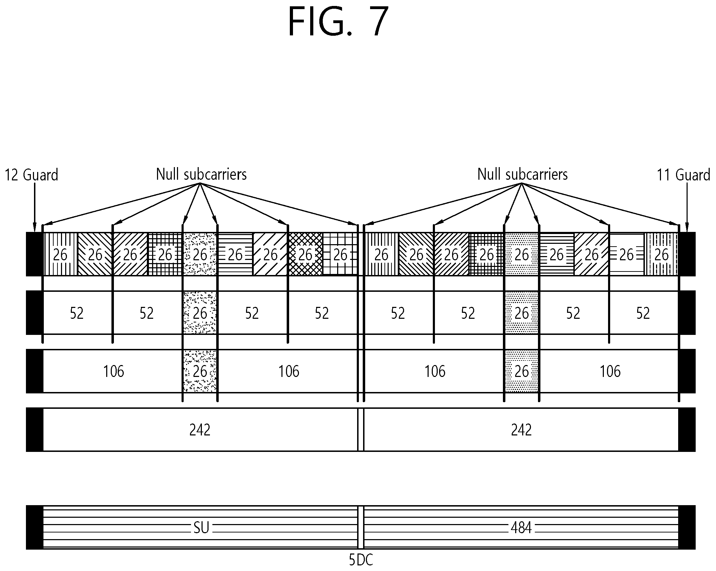

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

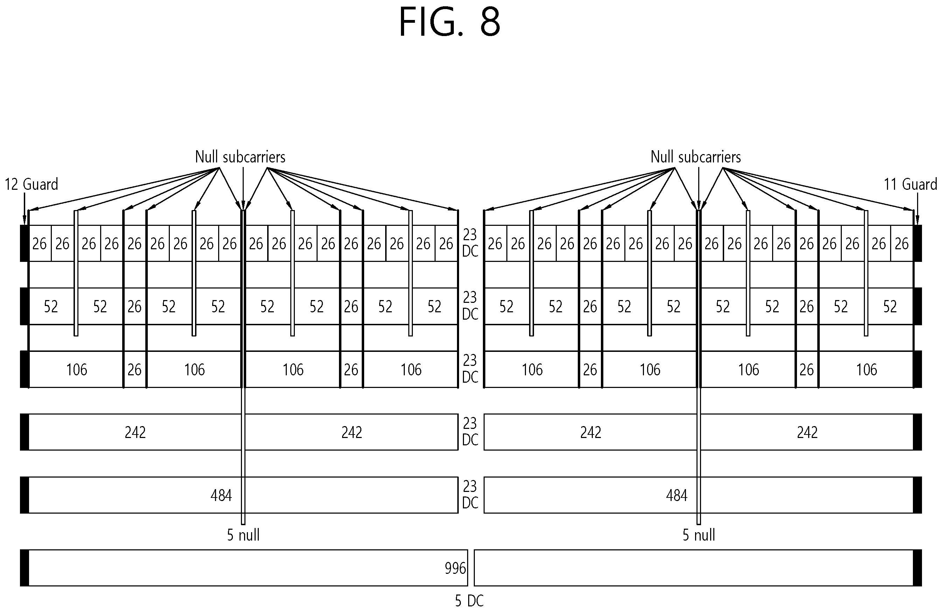

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

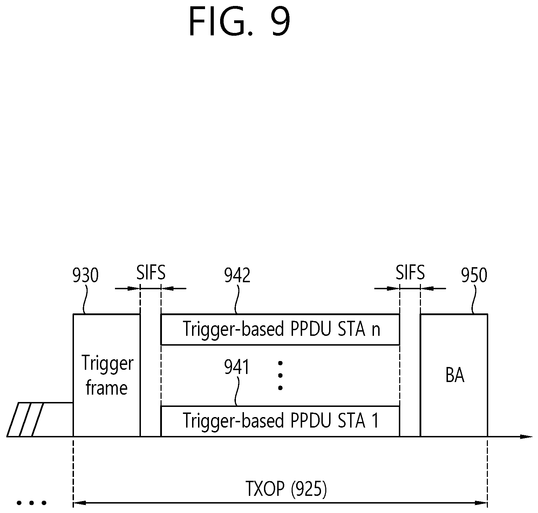

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

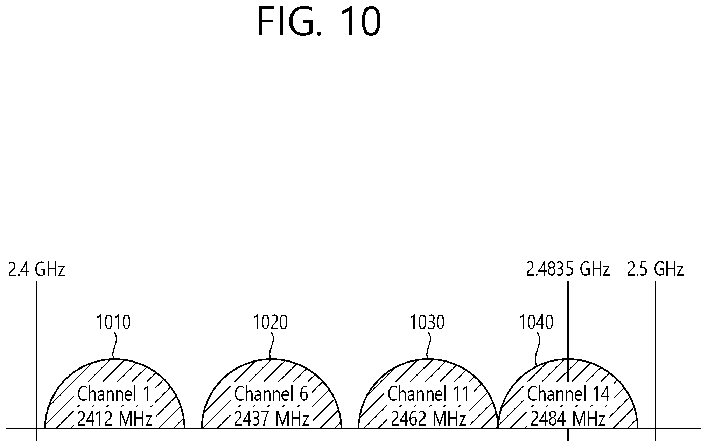

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

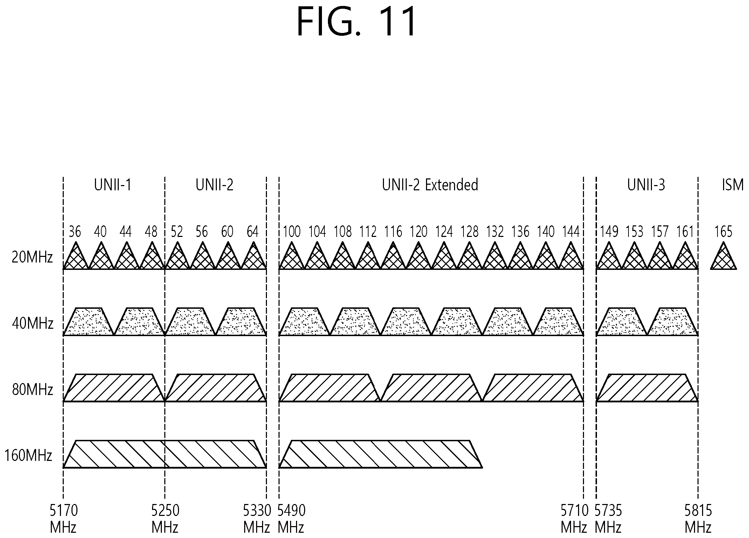

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

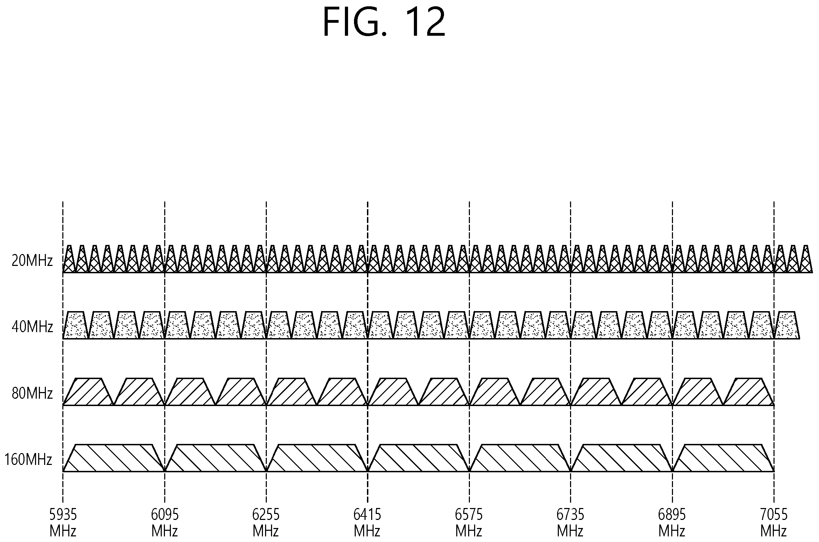

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

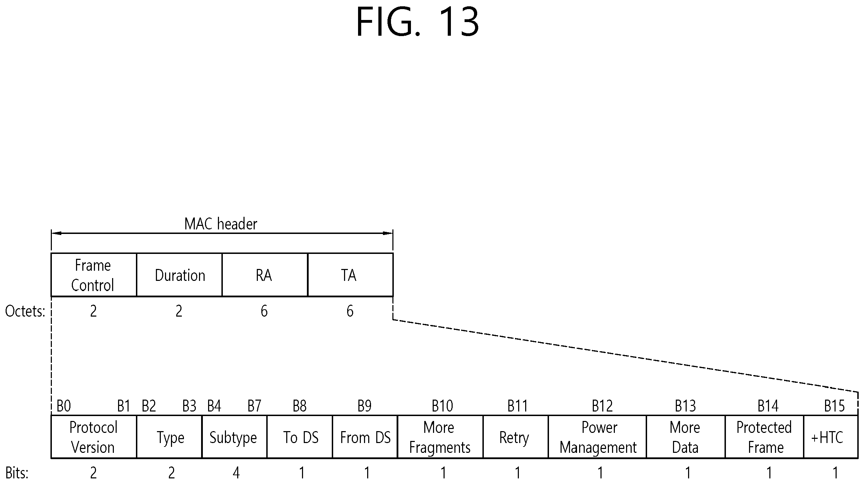

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response

(0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

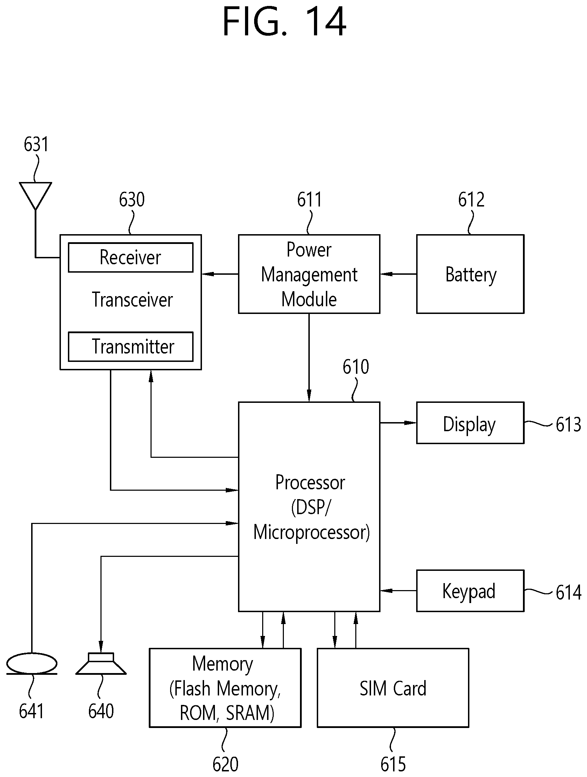

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

### 1. Secondary Channel

This specification proposes a process for secondary channel access, and first defines the primary channel and secondary channel as follows:
The primary channel is a common operating channel for all STAs that are members of the BSS. Based on a 20MHz, 40MHz, 80MHz, 160MHz, 80+80MHz, or 320MHz BSS, the primary channel is the primary 20MHz channel.
The secondary channel is a channel associated with a primary channel used to configure a wider channel than the primary channel, and in a 40MHz, 80MHz, 160MHz, 80+80MHz or 320MHz BSS, the secondary channel is a secondary 20MHz channel. The secondary channel may also be referred to as a non-primary channel or a Non-Primary Channel Access (NPCA) primary channel. In addition, Secondary Channel Access (SCA) may also be referred to as Non-Primary Channel Access (NPCA). In the following specification, these are described interchangeably.

### 2. Method for Performing Non-Primary Channel Access (NPCA) or Secondary Channel Access (SCA)

In the current 802.11, Channel Access is performed based on a Primary channel. For example, a STA may transmit a frame including a secondary channel that is IDLE only based on the Primary channel being IDLE and a Back-off counter (BC) becoming 0, and for this, all STAs perform Clear Channel Assessment (CCA) prioritizing the primary channel. Accordingly, an AP is announcing the Primary channel of a BSS and always includes the Primary channel to transmit a Management frame such as a Beacon, Probe Response frame and so on. This mechanism is effective for protection because frame exchange between all STAs and the AP is performed without interference, but on the other hand, based on only the primary channel being BUSY, it is inefficient in terms of medium use because access to the secondary channel that is IDLE is not possible.

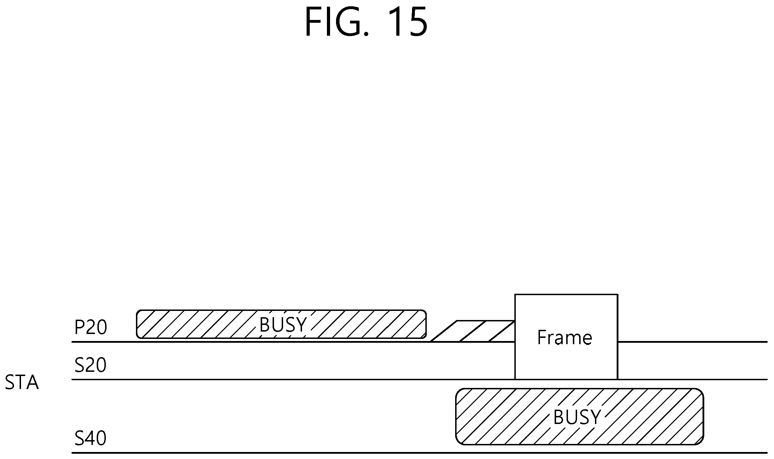

FIG. 15 illustrates an example of channel access in an 802.11 wireless LAN system.

FIG. 15 shows channel access based on the primary channel in 80MHz bandwidth. As shown in FIG. 15, this specification refers to the following:
P20: Primary 20MHz Channel
S20: Secondary 20MHz Channel (Based on the bandwidth being 40MHz, it means the remaining 20MHz secondary channel excluding P20)
S40: Secondary 40MHz Channel (Based on the bandwidth being 80MHz, it means the remaining 40MHz secondary channel excluding P20/S20)
S80: Secondary 80MHz Channel (Based on the bandwidth being 160MHz, it means the remaining 80MHz secondary channel excluding P20/S20/S40)
S160: Secondary 160MHz Channel (Based on the bandwidth being 320MHz, it means the remaining 160MHz secondary channel excluding P20/S20/S40/S80)
S320: Secondary 320MHz Channel (Based on the bandwidth being 640MHz, it means the remaining 320MHz secondary channel excluding P20/S20/S40/S80/S160)

Based on P20 being in a BUSY state due to CCA or NAV (Network Allocation Vector), the BC is not reduced and waits until it becomes IDLE. Through this back-off process, based on the BC reaching 0, the channel states of S20 and S40 are checked (i.e., CCA) and the frame is transmitted. In this example, based on S40 being BUSY, the STA transmits a frame corresponding to a 40MHz PPDU through P20 and S20.

As mentioned above, based on P20 being BUSY and S20 and S40 being IDLE as shown in FIG. 15, a bandwidth corresponding to 60MHz is wasted, and thus efficiency of medium use is reduced. Therefore, the present specification proposes a method for accessing a secondary channel based on P20 being BUSY. In addition, the present specification proposes a method for solving a misalignment issue in which a transmitting STA transmits a frame based on a receiving STA failing to perform a channel switch due to different channel switch times based on an STA and an AP switching from P20 to S20 or from S20 to P20.

Designations (names) in the present specification may be changed, and an STA may include an AP STA or a non-AP STA.

### 2.2 Secondary Channel Access Method

### 2.2.1 STA's Capabilities for Secondary Channel Access

Basically, capabilities for Secondary Channel Access (SCA) may be defined. For example, a STA and an AP may inform each other whether SCA Capability is supported/enabled. The capabilities of the SCA may be basically determined based on whether a first type Clear Channel Assessment (CCA) (referred to as preamble detection (PD)) capable of identifying a Wi-Fi frame performed in a Primary Channel (PCH) can be decoded in a Secondary Channel (SCH), for example. Through this, a NAV may be set even in the SCH.

Level 0: No Back-off on SCH: In the SCH, a second type CCA is performed as before. For example, a CCA capable of detecting a Wi-Fi signal (referred to as guard interval detection (GID)), a CCA detecting a signal above a specific intensity (referred to as energy detection (ED)) and so on are performed.

Level 1: Back-off on a SCH at a time: The PD, which is the first type CCA, is performed in only one secondary channel at a time. (For example, a CCA performed in a plurality of SCHs at the same time is not possible.)

Level 2: Back-off on SCHs at the same time: The PD, which is the first type CCA, is performed in one or more secondary channels at the same time. (For example, a CCA performed in a plurality of SCHs at the same time is possible.)

These capabilities may be included in an UHR capabilities Information Element (IE) and so on. For example, information on such capability may be included and transmitted in a Beacon, Probe Response frame and (Re)Association Response frame from a perspective of the AP, and in a Probe Request frame and (Re)Association Request frame from a perspective of a non-AP STA.

### 2.2.2 Basic Procedure of Secondary Channel Access

Two NAVs, a Basic NAV and an intra-BSS NAV, may be set for the aforementioned STA. The Basic NAV may be updated based on a PPDU identified as inter-BSS, or updated based on a PPDU that cannot be identified as inter-BSS or intra-BSS. The Intra-BSS NAV may be updated based on a PPDU identified as intra-BSS.

Basically, based on the Intra-BSS NAV being set in the PCH for the STA, the following situation may occur.
- Based on the AP performing frame exchange with one STA within an acquired Transmit Opportunity (TXOP), the intra-BSS NAV is set for other STAs based on the primary channel. At this time, based on the STA for which the intra-BSS NAV is set accessing the SCH and transmitting a frame to the AP, the AP does not receive this (for example, the frame on the SCH transmitted from the STA to the AP) during transmission (e.g., DL Data, Ack, etc.).

Therefore, the STA may perform the SCA based on the Basic NAV from another BSS other than its own BSS (for example, OBSS) being set in the PCH.

For example, the STA may perform the SCA based on the Basic NAV being set in the PCH.

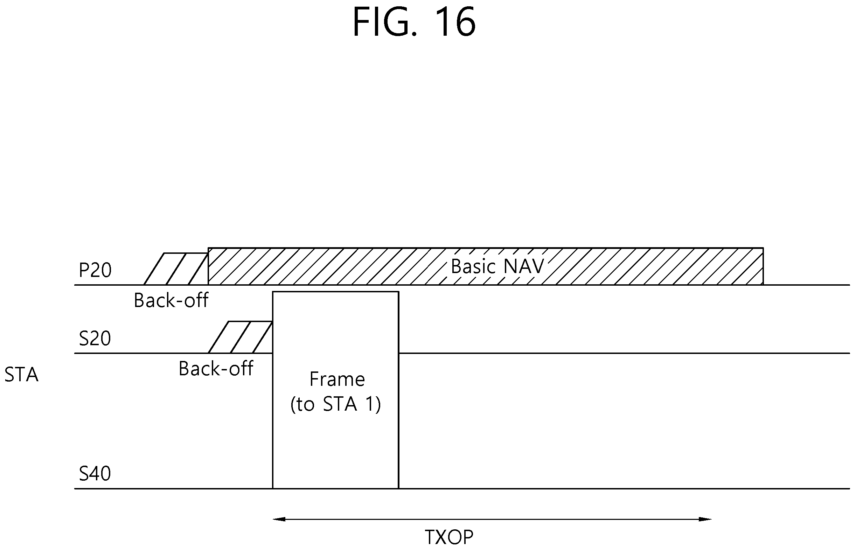

FIG. 16 illustrates an example of the basic procedure for SCA.

FIG. 16 illustrates a basic SCA procedure. Based on a Basic NAV being set while an STA is performing back-off in P20, the STA performs back-off in S20 at a timing when the NAV is set. (A switching delay for PD from P20 to S20 may occur for the PD to S20.) This has a difference in a CCA method from a perspective that CCA may be performed in S20, and it may be performed at all levels. The reason for performing back-off in S20 is that, based on neighboring STAs having the same or similar operation channel as the STA transmitting frames at the same time without performing back-off based on a channel being IDLE, a collision occurs and thus a medium may be wasted.

Considerations when performing the SCA are as follows.

### i) Frame transmission method

In the related art, based on a back-off counter becoming 0 through back-off in P20, a frame may be transmitted through P20 and one or more SCHs that are IDLE based on whether the one or more SCHs are IDLE/BUSY. Therefore, for the SCA, a change is required because a situation where P20 is BUSY is considered, and a back-off operation for this is as follows.
- The STA may perform back-off in one or more SCHs based on P20 being BUSY.
   => The reason for performing back-off in the SCH as well is that, based on neighboring STAs having the same or similar operation channel as a specific STA being determined as IDLE as a CCA result for a channel during a predetermined short time (e.g., 1 slot) without performing back-off on a channel including/overlapping the SCH of the specific STA, and the specific STA and the neighboring STAs transmitting frames at the same time, a collision occurs and thus a medium may be wasted.
   => Based on a NAV timer remaining in the current PCH (P20) not being sufficient time to acquire a TXOP in the SCH, back-off may not be performed in the SCH.
- The STA may perform a second type of CCA for other SCH(s) other than one or more SCHs in which back-off is performed based on the back-off counter becoming 0. For example, it may be determined whether a channel is IDLE or BUSY by performing CCA for other SCH(s) other than the SCH in which back-off is performed during a predetermined time (e.g., PIFS) before a timing when the back-off counter becomes 0 in the SCH in which back-off is performed.
- Based on a CCA result, the STA transmits a frame on a channel including one or more SCHs that are IDLE and one or more SCHs in which back-off is performed.

For example, in the example of FIG. 16, back-off is being performed in S20, and based on the back-off counter becoming 0, two 20MHz channels of S40 are both in an IDLE state. Therefore, in this case, an 80MHz PPDU (including a MAC Frame) including signaling that P20 is punctured may be transmitted.

### ii) TXOP setting method

Based on the Basic NAV in P20 expiring, CCA must basically be performed for P20, and thus a TXOP is acquired such that an end time of the TXOP in the SCH ends before a timing when the Basic NAV expires.
=> Based on the TXOP being acquired to end after the timing when the Basic NAV expires, a legacy STA or the like may transmit a frame through P20 after the Basic NAV set for the STA, and thus a problem occurs in that the STA may not receive this. In addition, based on a target beacon transmission time (TBTT) being set in the middle of the Basic NAV, a problem may occur because the AP must prepare to transmit a Beacon immediately after the Basic NAV, and there is also a problem in that a non-AP STA does not receive the Beacon to be transmitted by the AP in time and waits for more time than scheduled. Therefore, a normal frame exchange may be performed in P20 through a condition of 'a TXOP is acquired such that the end time of the TXOP ends before the timing when the Basic NAV expires.'
=> Based on there not being sufficient time to acquire the TXOP, a frame is not transmitted. For example, based on it being difficult to acquire a TXOP as much as an interval between a timing when a back-off counter (BC) is 0 in the SCH and a timing when the Basic NAV in the PCH ends, a frame is not transmitted.

For example, as in the example of FIG. 16, based on back-off being performed in S20 and the back-off counter becoming 0 to acquire a TXOP, it is made to end earlier than the timing when the Basic NAV ends.

### <SCA Operation Procedure of STA #1>

- Here, an STA may be a non-AP STA or an AP.

In the present disclosure, an STA performing SCA may transmit a frame/PPDU on an SCH even during a time when a NAV is set in a PCH. For example, the STA may transmit a frame (or PPDU) excluding (or puncturing) the PCH on one or more SCHs in an IDLE state determined through back-off performed on one or more SCHs and a CCA result of one or more SCHs where back-off is not performed.

Additionally or alternatively, a TXOP starting with transmission of a frame or PPDU on the SCH may be set to end before a timing when the NAV on the PCH expires. A TXOP length may be set/indicated through a duration/ID field of a corresponding frame. For example, a value of the duration/ID field may be set to a value including a time (including an inter-frame space (IFS)) required for exchange of a frame or PPDU following the corresponding frame or PPDU.

Additionally or alternatively, an Enhanced Distributed Channel Access (EDCA) Parameter Set for each SCH where back-off is performed may be set to an EDCA Parameter Set or a Multi-User (MU) EDCA Parameter Set in the PCH, or a new EDCA Parameter Set. This EDCA Parameter Set may be applied identically or differently for all SCHs.

In the present disclosure, an STA receiving a frame transmitted through the SCA may perform frame detection on the SCH even during the time when the NAV is set in the PCH. For example, the STA may perform back-off on the SCH based on having a frame to transmit, or may attempt reception to check if there is a frame addressed to itself on the SCA even based on having no frame to transmit. In addition, the STA may perform setting/resetting of the NAV based on a value of a duration/ID field of a frame detected on the SCH.

Additionally or alternatively, the EDCA Parameter Set for each SCH where back-off is performed may be set to the EDCA Parameter Set or the MU EDCA Parameter Set in the PCH, or a new EDCA Parameter Set. This EDCA Parameter Set may be applied identically or differently for all SCHs.

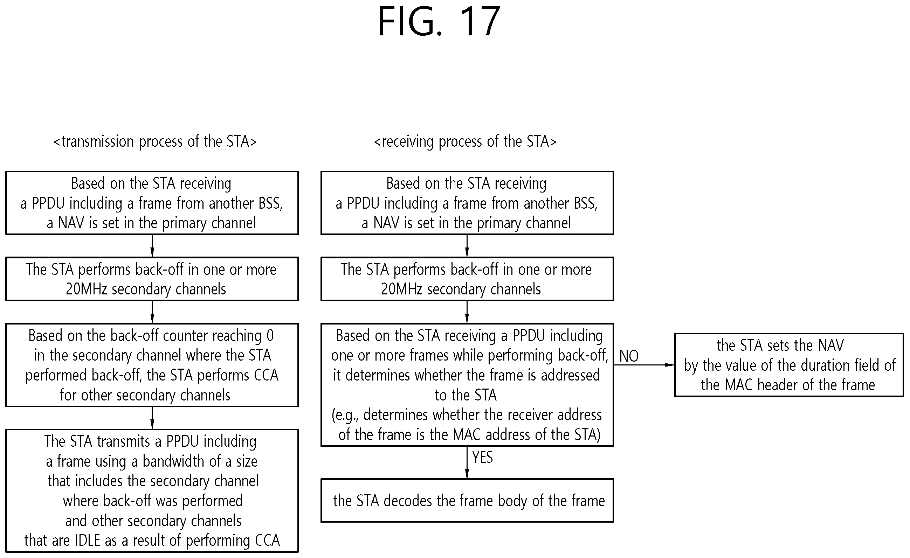

FIG. 17 shows the basic Secondary Channel Access operation process for an STA.

Referring to FIG. 17, the transmission process of the STA is as follows:

Based on the STA receiving a PPDU including a frame from another BSS, a (Basic) NAV is set in the primary channel. The STA performs back-off in one or more 20MHz secondary channels. Based on the back-off counter reaching 0 in the secondary channel where the STA performed back-off, the STA performs CCA for other secondary channels. The STA transmits a PPDU including a frame using a bandwidth of a size that includes the secondary channel where back-off was performed and other secondary channels that are IDLE as a result of performing CCA.

Referring to FIG. 17, the receiving process of the STA is as follows:

Based on the STA receiving a PPDU including a frame from another BSS, a (Basic) NAV is set in the primary channel. The STA performs back-off in one or more 20MHz secondary channels. Based on the STA receiving a PPDU including one or more frames while performing back-off, it determines whether the frame is addressed to the STA (e.g., determines whether the receiver address of the frame is the MAC address of the STA). Based on the frame being addressed to the STA, the STA decodes the frame body of the frame. Based on the frame not being addressed to the STA, the STA sets the NAV by the value of the duration field of the MAC header of the frame.

### 2.2.3 AP's Announcement for Secondary Channels regarding Secondary Channel Access

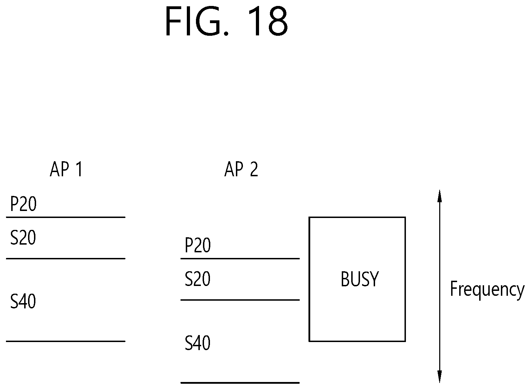

FIG. 18 illustrates an example where BSS channels between APs overlap.

Meanwhile, based on a BSS Operating channel of an AP (MLD) overlapping with BSS Operating channels of neighboring APs (for example, OBSS APs, SCA may be affected by each other. For example, based on one AP succeeding in SCA and using all SCHs, a PCH of another AP may overlap, leading to a problem where channel access opportunities decrease. For example, assuming that a STA in FIG. 16 is AP 1 in FIG. 18, since S20 of AP 1 is P20 of AP 2, AP 2 cannot use P20 and S20. For example, relatively, based on AP 1 performing SCA, a problem may occur where the other AP 2 does not have many existing PCH-based channel access opportunities. Additionally, based on one AP having capabilities for SCA while another AP does not have capabilities for SCA, fairness may decrease as the time during which the AP with SCA capabilities occupies the channel may become longer.

Therefore, to allow the AP and the STA to use the SCH considering the surrounding situation, it is necessary for the AP to announce information such as whether to allow SCA and a channel for which SCA is allowed. The AP may include at least one of the following information regarding a Secondary Channel Access Operation. This information may be included in a UHR Operation IE (Information Element) or in the form of a new IE within a Management frame including a Beacon and a Probe Response of the AP.
- Secondary Channel Access Allowed: This indicates whether to allow SCA.
   => E.g., based on having 1 bit, a value of '1' allows SCA, and a value of '0' does not allow SCA.
- Secondary Channel Access Bandwidths: A maximum PPDU (Physical Layer Convergence Procedure Protocol Data Unit) Bandwidth that may be transmitted when performing SCA.
   => E.g., This indicates a 20/40/80/160/320MHz Bandwidth (additionally, it may have a 640MHz Bandwidth).
   => This Bandwidth must not be greater than an Operating Bandwidth of the BSS. Here, the BSS Operating Bandwidth (or a Bandwidth of a BSS Operating channel) means a Bandwidth operated by a corresponding BSS. This is announced by the AP through a Beacon or a Probe Response frame. For example, based on the BSS Operating Bandwidth of FIG. 16 being 160MHz, even if one or more SCHs of S80 are IDLE, based on the Max PPDU Bandwidth announced by the AP being 80MHz, S80 is not included as in the frame of FIG. 16 and is transmitted in a form of an 80MHz PPDU.
- Secondary Channel CCA (Clear Channel Assessment) Threshold: This is a Threshold of a criterion for determining whether a channel is IDLE or BUSY through CCA in one or more SCHs where SCA is performed. For example, based on power equal to or greater than this Threshold being measured, the channel is determined to be BUSY. Based on this value being lower, a probability of determining the channel to be BUSY even at low power may increase.
   => For example, this may be determined as one fixed/reference value (e.g., -82dBm, -72dBm). Additionally or alternatively, it may be determined as a value obtained by adding a changing value (e.g., 4dBm, 8dBm) to this fixed value. In this case, only the changing value may be transmitted.
   => This Threshold may be applied to a first type CCA or a second type CCA.

### <STA Operation Procedure for SCA #2>

- A STA may be a non-AP STA or an AP.

In the present disclosure, a STA performing SCA may transmit a frame/PPDU on an SCH even during a time when a NAV is set in a PCH. For example, the STA may transmit a frame or a PPDU excluding (or puncturing) the PCH on one or more SCHs in an IDLE state, which is determined based on a back-off performed on one or more SCHs and a CCA result of one or more SCHs where the back-off is not performed.

Additionally or alternatively, a TXOP (Transmission Opportunity) starting with the transmission of the frame or the PPDU on the SCH may be configure to terminate before a timing when the NAV on the PCH terminates. A TXOP length may be set/indicated through a duration/ID field of a corresponding frame. For example, a value of the duration/ID field may be set to a value including a time required for a frame or PPDU exchange following the corresponding frame or PPDU (including an Inter-Frame Space (IFS)).

Additionally or alternatively, information on whether a frame/PPDU transmission on the SCH is possible and information on one or more SCHs performing back-off when possible may be obtained from a management frame (for example, Beacon) transmitted by an AP. Based on the STA performing the SCA being the AP, the AP may use information transmitted by itself (information on whether the frame/PPDU transmission is possible and information on one or more SCHs performing the back-off when possible).

Additionally or alternatively, maximum Bandwidth information for transmitting the frame/PPDU on the SCH may be obtained from the management frame (for example, Beacon) transmitted by the AP. Based on the STA performing the SCA being the AP, the AP may use information transmitted by itself (maximum Bandwidth information for transmitting the frame/PPDU).

Additionally or alternatively, a Threshold for a first type CCA or a second type CCA for determining whether a channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

Additionally or alternatively, an EDCA Parameter Set for each SCH where the back-off is performed may be configure as an EDCA Parameter Set in the PCH, a MU EDCA Parameter Set, or a new EDCA Parameter Set. This EDCA Parameter Set may be applied identically or differently for all SCHs.

In the present disclosure, a STA receiving a frame transmitted through the SCA may perform frame detection on the SCH even during the time when the NAV is set in the PCH. For example, the STA may perform the back-off on the SCH based on having a frame to transmit, or may attempt reception to check if there is a frame addressed to itself on the SCA even based on having no frame to transmit. Additionally, the STA may perform NAV setting/resetting based on a value of a duration/ID field of a frame detected on the SCH.

Additionally or alternatively, information on whether a frame/PPDU reception on the SCH is possible and information on one or more SCHs performing the back-off when possible may be obtained from the management frame (for example, Beacon) transmitted by the AP. Based on the STA performing the SCA being the AP, the AP may use information transmitted by itself (information on whether the frame/PPDU reception is possible and information on one or more SCHs performing the back-off when possible).

Additionally or alternatively, the Threshold for the first type CCA or the second type CCA for determining whether the channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

Additionally or alternatively, the EDCA Parameter Set for each SCH where the back-off is performed may be configure as the EDCA Parameter Set in the PCH, the MU EDCA Parameter Set, or the new EDCA Parameter Set. This EDCA Parameter Set may be applied identically or differently for all SCHs.

Meanwhile, for more efficient Secondary channel access, channels including a current BSS Operating channel may be divided into multiple sets to allow the back-off to be performed for each set. For this purpose, the management frame may include at least one of the information described in 2.2.3 and the following additional information:
- Channel Subset Unit: A unit for how to divide a Channel Subset based on a Bandwidth of an entire BSS Operating channel.
   => E.g., Based on the Channel Subset Unit having 2 bits, it may be configured as 0: No Subset / 1: 40MHz / 2: 80MHz / 3: 160MHz. Additionally, based on having 320MHz, the Channel Subset Unit may have 3 bits.
   => The meaning of "No Subset" means that a Channel will not be separately divided into subsets.

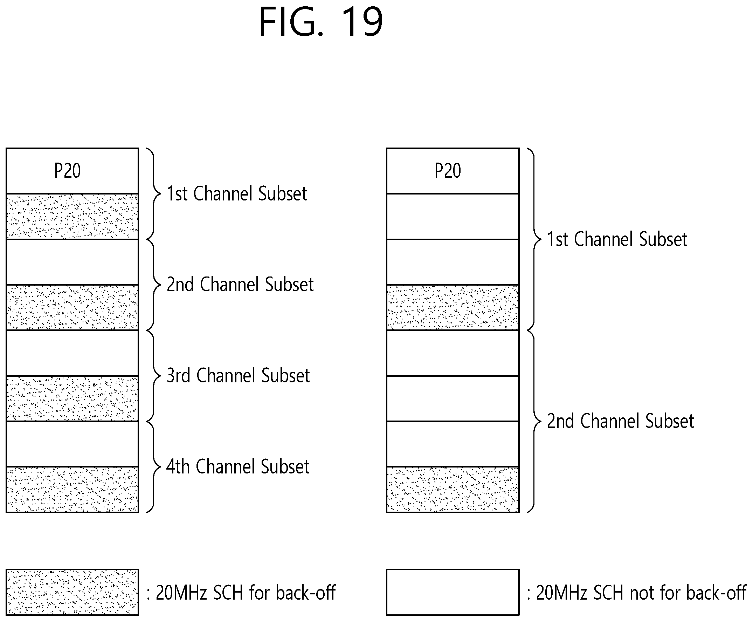

FIG. 19 illustrates an example for a case where a bandwidth of a BSS Operating Channel is 160MHz.
=> For example, FIG. 19 is an example where a 160MHz BSS Operating Channel is divided into Channel Subsets based on 40MHz on the left and 80MHz on the right.

Secondary Channel Access Channels: A Secondary Channel which is a reference when performing SCA within one Channel Subset Unit (e.g., a channel where back-off is performed).
=> This may indicate which channel within each Channel Subset Unit serves as the reference Secondary channel.
=> For example, a Bitmap may be used. For example, as in the left example of FIG. 19, based on the Channel Subset being divided based on 40MHz, and back-off being performed based on a second Secondary channel within the 40MHz Channel Subset, it may be indicated as a 2-bit bitmap of 01 based on each bit being based on a 20MHz channel. Based on the Channel Subset being divided based on 80MHz as in the right example of FIG. 19, it may be indicated as a 4-bit bitmap of 0001.
=> All Channel Subsets have a Secondary Channel at an identical location.
=> Each bit of the Bitmap may have the following correlation with a channel:

From a first bit to a last bit, they may respectively correspond from the lowest frequency 20MHz channel to the highest frequency 20MHz channel, or vice versa, from the highest frequency 20MHz channel to the lowest frequency 20MHz channel.
=> Additionally or alternatively, Indexing may be used. For example, in the left example of FIG. 19, based on the back-off being performed based on the second Secondary channel within the 40MHz Channel Subset, it may be indicated as Index 1. Based on the back-off being performed based on a first Secondary channel, it may be indicated as Index 0. As in the right example of FIG. 19, based on the back-off being performed based on a fourth Secondary channel within the 80MHz Channel Subset, it may be indicated as Index 3. As mentioned above, based on performing the back-off based on the first Secondary channel, it may be indicated as Index 0; based on the second Secondary channel, Index 1; and based on a third Secondary channel, Index 2.
=> A Secondary channel to perform the back-off may be indicated through the Bitmap or Indexing mentioned above.
   - Secondary Channel Access Channels Bitmap Size: A size of a bitmap when expressing the Secondary Channel Access Channels, which is one of the information described above, as a bitmap.
=> For example, based on the Secondary Channel Access Channels Bitmap Size having 3 bits, it may indicate a bitmap size of 2 bits if 0, 4 bits if 1, 8 bits if 2, 16 bits if 4, or 32 bits if 5.
=> This may vary based on the Channel Subset Unit, which is the information described above. For example, based on dividing a 320MHz BSS Operating Channel into 40MHz Channel Subset Units, the Secondary Channel Access Channels Bitmap Size has 2 bits, and based on dividing it into 80MHz Channel Subset Units, it has 4 bits.
=> Based on the Secondary Channel Access Channels being expressed as a Bitmap, there is no need to express it for each Channel subset. For example, there is no need to configure each Bitmap corresponding to each Subset as a field, and a bit for a reference secondary channel for one bitmap only needs to have a value of 1.

FIG. 19 shows an example for a case where a bandwidth of a BSS Operating Channel is 160MHz. In FIG. 19, shaded parts excluding P20 mean SCHs that serve as a reference for SCA, i.e., SCHs capable of performing the back-off. Specifically, the left example of FIG. 19 is a case where the Channel Subset Unit is 40MHz, and the right example of FIG. 19 is a case where the Channel Subset Unit is 80MHz.

Regarding the left example of FIG. 19, the Bitmap size may be expressed as 2 bits, and the Secondary Channel Access Channels may be set to 01. For example, it may be expressed as one Bitmap for all Channel Subsets. Additionally or alternatively, when indicating the Secondary channel to perform the back-off through Indexing, the Secondary Channel Access Channels is set to Index 1.

Regarding the right example of FIG. 19, the Bitmap size may be set to 4 bits and set to 0001. Similarly, it may be expressed as one Bitmap for all Channel Subsets. Additionally or alternatively, when indicating the Secondary channel to perform the back-off through Indexing, the Secondary Channel Access Channels is set to Index 3.

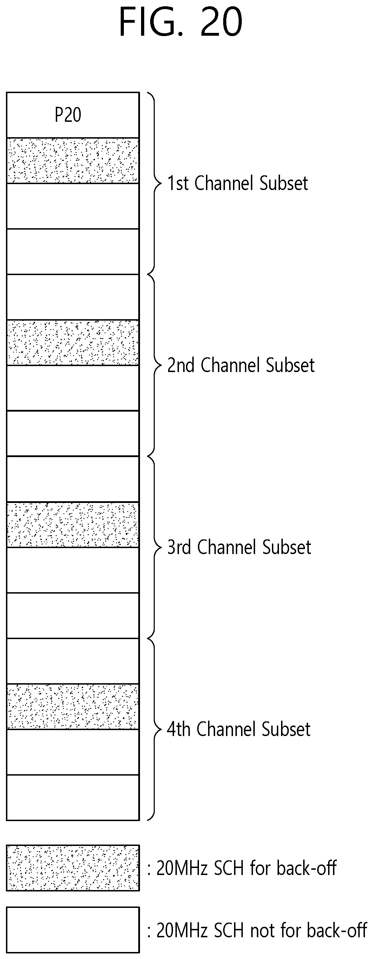

FIG. 20 illustrates an example for a case where a bandwidth of a BSS Operating Channel is 320MHz.

FIG. 20 illustrates an example for a case where a bandwidth of a BSS Operating Channel is 320MHz and a Channel Subset Unit is 80MHz. In FIG. 20, shaded parts excluding P20 mean SCHs that serve as a reference for SCA, i.e., SCHs capable of performing back-off. Regarding this example, the Bitmap size may be set to 4 bits and set to 0100.

Additionally or alternatively, based on indicating a Secondary channel to perform the back-off through Indexing, the Secondary Channel Access Channels is set to Index 1.

All Channel Subsets may be expressed with one Bitmap or Indexing.

### 2.2.4 Back-off Mechanisms for Secondary Channel Access

Meanwhile, a Secondary Channel access method needs to be additionally designed based on the above information and SCA Capabilities of a STA. This specification proposes a back-off method for a case where an AP and a Non-AP STA have Level 1 SCA Capability, i.e., a case where back-off may be performed in only one SCH at a time.

An AP and a non-AP STA having Level 1 Capability may perform back-off in only one channel at a time. Therefore, even if subsets are divided, since back-off cannot be performed in each channel of multiple subsets simultaneously, the AP needs to inform the STA of a channel to preferentially perform back-off or a back-off order. The method is as follows but is not limited thereto.

Basically, since the AP may perform back-off in only one SCH at a time, the AP may provide information on an SCH for which back-off is preferentially performed. For this purpose, the AP may announce at least one of the following information through a management frame such as a Beacon or a Probe Response frame:
- First Secondary Access Channel: A Channel Subset including an SCH for which the AP performs back-off for the first time.
   => For example, only a bit of a Channel Subset including an SCH to perform back-off first may be indicated as 1 using a Bitmap.
   => For example, based on having an 80MHz Channel Subset Unit in FIG. 20, based on intending to perform back-off first in a Secondary Channel included in a third Channel Subset, it may be indicated as 0010.

Additionally or alternatively, Indexing may be used. Based on using Indexing, based on intending to perform back-off first in the Secondary channel of the third Channel Subset in FIG. 20, it may be indicated as Index 2.
=> Through this information, frame exchange is possible because both the AP and the Non-AP STA are performing CCA in an identical SCH for back-off.
   - First Secondary Access Channel Bitmap Size: A Size for a bitmap when expressing the First Secondary Access Channel, which is one of the information described above, as a bitmap.
=> For example, based on the First Secondary Access Channel Bitmap Size having 3 bits, it may indicate that the bitmap size is 2 bits if 0, 4 bits if 1, 8 bits if 2, 16 bits if 4, or 32 bits if 5.
=> This may vary based on the BSS Operating Channel and the Channel Subset Unit, which are the information described in 2.2.3. For example, based on dividing a 320MHz BSS Operating Channel into 80MHz Channel Subset Units as in FIG. 20, the First Secondary Channel Access Channel Bitmap Size has 4 bits, and based on dividing it into 40MHz Channel Subset Units, it has 8 bits. For example, it has bits of a value obtained by dividing the BSS Operating Channel by the Channel Subset Unit.
=> For one bitmap, a bit corresponding to a Channel Subset at a corresponding location only needs to have a value of '1'.
   - Secondary Channel Access Order: This informs an order of back-off channels for one or more Channel Subsets within the BSS Operating Channel.
=> For example, the Secondary Channel Access Order field may inform the order from a higher band frequency to a lower band frequency or from a lower band frequency to a higher band frequency.
=> Additionally, based on the Secondary Channel Access Order field always existing, it may include a reserved value based on subsets not being distinguished or switching not being required according to the order.
=> Through this information, based on transmission/reception not being properly performed for a predetermined time between the AP and the STA in an SCH of one channel subset, switching to an SCH of another channel subset may be performed. For example, frame transmission may be difficult due to a NAV.
   - SCH Access Timer: A Timer for channel access in an SCH. This Timer starts to operate from the start of back-off. If any frame transmission or reception is not successfully performed during a time until this Timer expires, switching to an SCH of another channel subset or switching to a PCH is performed to perform back-off.
=> For example, this field may have a value having a specific unit (16us, 32us, etc.).
=> The Timer may differ for each SCH where back-off is performed.
=> The Timer may differ according to a Basic NAV value set in the PCH.
=> Based on frame transmission or reception being successfully performed, the Timer is reset and does not operate.

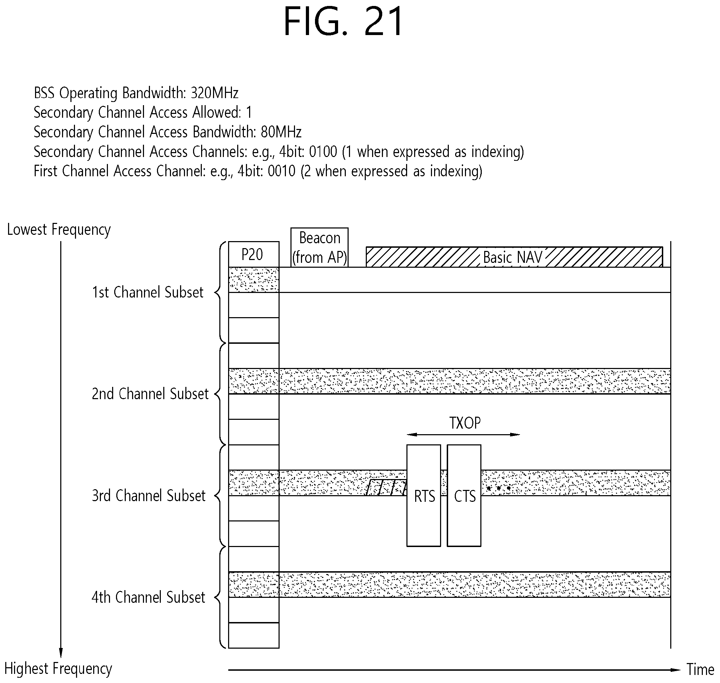

FIG. 21 illustrates an example for SCA based on a bandwidth of a BSS Operating Channel being 320MHz and four channel subsets of an 80MHz unit. (without SCA order)

FIG. 21 is an example of SCA after a STA receives the following information from an AP (Access Point). Based on the STA being the AP, the STA already knows the information.
- The example of FIG. 21 also has the Secondary Channel Access Channels of FIG. 20.
- Based on the First Channel Access Channel being 0010, it may be confirmed that an SCH to perform a first back-off is included in a third Channel Subset. Next, based on the Secondary Channel Access Channels being expressed as a bitmap of 0100 or an index of Index 1, it may be confirmed that a second Secondary Channel within the third Channel Subset is the channel to perform the back-off. In the Channel Subset, this channel is a tenth channel (including the PCH) in an order from the lowest frequency to the highest frequency, i.e., in ascending order in terms of frequency. For example, the Secondary Channel which is a reference for SCA is the second SCH of the third channel subset.
   => Based on a back-off counter becoming 0, a frame exchange may be performed through the tenth channel, which is the SCH where the back-off was performed, and one or more other IDLE channels based on a CCA result of the Channel Subset including this channel.
- Based on the SCA Order and Timer fields existing, they are reserved.

Therefore, based on a NAV being set in P20, the STA initially performs the back-off in the SCH, which is the tenth channel. Since there is currently no information on Timer and Ordering, the corresponding STA continues to perform the back-off in this SCH and performs the frame exchange based on obtaining a TXOP (Transmission Opportunity). Through this, even if the PCH is BUSY, the channel may be effectively used by utilizing the SCH.

### <STA Operation Procedure for SCA #3>

- A STA may be a non-AP STA or an AP.

In the present disclosure, a STA performing SCA may transmit a frame/PPDU on an SCH even during a time when a NAV is set in a PCH. For example, the STA may transmit a frame/PPDU excluding or puncturing the PCH on one or more SCHs in an IDLE state, which is determined based on a back-off performed on one or more SCHs and a CCA result of one or more SCHs where the back-off is not performed.

Additionally or alternatively, a TXOP starting with the transmission of the frame/PPDU on the SCH may be configure to terminate before a timing when the NAV on the PCH terminates. A TXOP length may be set/indicated through a duration/ID field of a corresponding frame. For example, a value of the duration/ID field may be set to a value including a time required for a frame/PPDU exchange following the corresponding frame/PPDU (including an Inter-Frame Space (IFS)).

Additionally or alternatively, information on whether a frame/PPDU transmission on the SCH is possible and information on one or more SCHs performing back-off when possible may be obtained from a management frame (for example, Beacon) transmitted by an AP. Based on the STA performing the SCA being the AP, the AP may use information transmitted by itself (information on whether the frame/PPDU transmission is possible and information on one or more SCHs performing the back-off when possible).

Additionally or alternatively, the information on one or more SCHs performing the back-off may be transmitted based on a Channel Subset obtained by dividing a bandwidth of an entire BSS (Basic Service Set) Operating channel by a predetermined unit (for example, 40MHz/80MHz). For example, an SCH to perform the back-off in each divided Channel Subset is determined and transmitted. An SCH to perform the back-off at an identical location in the Channel Subset is determined.

=> Additionally or alternatively, based on a back-off counter becoming 0 in an SCH where back-off is performed in one Channel Subset, a channel for which a second type CCA may be performed may be applied only to other SCH(s) in the identical Channel Subset. This may be identically applied to other Channel Subsets.

Additionally or alternatively, an EDCA (Enhanced Distributed Channel Access) Parameter Set for each SCH where the back-off is performed may be configure as an EDCA Parameter Set in the PCH, a MU EDCA Parameter Set, or a new EDCA Parameter Set. This EDCA Parameter Set may be applied identically or differently for all SCHs.

Additionally or alternatively, maximum Bandwidth information for transmitting the frame/PPDU on the SCH may be obtained from the management frame (for example, Beacon) transmitted by the AP. Based on the STA performing the SCA being the AP, the AP may use information transmitted by itself (maximum Bandwidth information for transmitting the frame/PPDU).

Additionally or alternatively, a Threshold for a first type CCA or a second type CCA for determining whether a channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

In the present disclosure, a STA receiving a frame transmitted through the SCA may perform frame detection on the SCH even during the time when the NAV is set in the PCH. For example, the STA may perform the back-off on the SCH based on having a frame to transmit, or may attempt reception to check if there is a frame addressed to itself on the SCA even based on having no frame to transmit. Additionally, the STA may perform NAV setting/resetting based on a value of a duration/ID field of a frame detected on the SCH.

Additionally or alternatively, information on whether a frame/PPDU reception on the SCH is possible and information on one or more SCHs performing the back-off when possible may be obtained from the management frame (for example, Beacon) transmitted by the AP. Based on the STA performing the SCA being the AP, the AP may use information transmitted by itself (information on whether the frame/PPDU reception is possible and information on one or more SCHs performing the back-off when possible).

Additionally or alternatively, the information on one or more SCHs performing the back-off may be transmitted based on a Channel Subset obtained by dividing the bandwidth of the entire BSS Operating channel by a predetermined unit (for example, 40MHz/80MHz). For example, the SCH to perform the back-off in each divided Channel Subset is determined and transmitted. There may be no SCH performing the back-off in a Channel Subset.

Additionally or alternatively, the EDCA Parameter Set for each SCH where the back-off is performed may be configure as the EDCA Parameter Set in the PCH, the MU EDCA Parameter Set, or the new EDCA Parameter Set. This EDCA Parameter Set may be applied identically or differently for all SCHs.

Additionally or alternatively, the Threshold for the first type CCA or the second type CCA for determining whether the channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

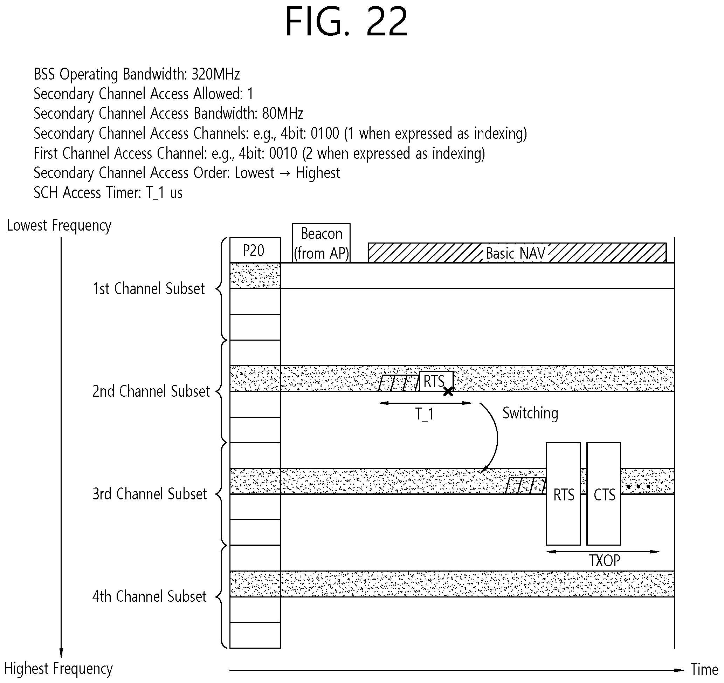

FIG. 22 illustrates an example for SCA based on a bandwidth of a BSS Operating Channel being 320MHz and four channel subsets of an 80MHz unit. (with SCA order)

FIG. 22 illustrates an example of SCA (Secondary Channel Access) after a STA (Station) receives the following information from an AP (Access Point). Based on the STA being the AP, the STA already knows the information.
- The example of FIG. 22 also has the Secondary Channel Access Channels of FIG. 20.
- Based on the First Channel Access Channel being 0010, it may be confirmed that an SCH to perform a first back-off is included in a third Channel Subset. Next, based on the Secondary Channel Access Channels being expressed as a bitmap of 0100 or an index of Index 1, it may be confirmed that a second Secondary Channel within the third Channel Subset is the channel to perform the back-off. In the Channel Subset, this channel is a second channel (including the PCH) in an order from the lowest frequency to the highest frequency, i.e., in ascending order in terms of frequency. For example, the Secondary Channel which is a reference for SCA is the second channel in the third channel subset.
- After a Timer expires, an SCH switching order is from the lowest frequency to the highest frequency, i.e., in ascending order based on frequency. An SCH to be switched is based on the SCH indicated in the Secondary Channel Access Channels.

Therefore, based on a NAV being set in P20, the STA initially performs the back-off in the SCH, which is the second channel. Thereafter, based on failure in frame transmission and reception, such as an RTS frame, for a time $T_1$, which is the Timer, the STA performs the back-off again in the second SCH, which is the back-off channel of the third channel subset, after the Timer expires. Subsequently, based on a frame exchange succeeding, the frame exchange is performed for a captured TXOP (Transmission Opportunity). In this example, the frame exchange is performed with an 80MHz PPDU during the TXOP. Through this, even if the PCH is BUSY, the channel may be effectively used by utilizing the SCH. Additionally, even if some SCHs are BUSY, a channel utilization rate may be effectively increased by utilizing other SCHs through switching between subsets.

### <STA Operation Procedure for SCA #4>

- A STA may be a non-AP STA or an AP.

In the present disclosure, a STA performing SCA may transmit a frame/PPDU on an SCH even during a time when a NAV is set in a PCH. For example, the STA may transmit a frame/PPDU excluding or puncturing the PCH on one or more SCHs in an IDLE state, which is determined based on a back-off performed on one or more SCHs and a CCA result of one or more SCHs where the back-off is not performed.

Additionally or alternatively, a TXOP starting with the transmission of the frame/PPDU on the SCH may be configure to terminate before a timing when the NAV on the PCH terminates. A TXOP length may be set/indicated through a duration/ID field of a corresponding frame. For example, a value of the duration/ID field may be set to a value including a time required for a frame/PPDU exchange following the corresponding frame/PPDU (including an Inter-Frame Space (IFS)).

Additionally or alternatively, information on whether a frame/PPDU transmission on the SCH is possible and information on one or more SCHs performing back-off when possible may be obtained from a management frame (for example, Beacon) transmitted by an AP. Based on the STA performing the SCA being the AP, the AP may use information transmitted by itself.

Additionally or alternatively, the information on one or more SCHs performing the back-off may be transmitted based on a Channel Subset obtained by dividing a bandwidth of an entire BSS Operating channel by a predetermined unit (for example, 40MHz/80MHz). For example, an SCH to perform the back-off in each divided Channel Subset is determined and transmitted. There may be no SCH performing the back-off in a Channel Subset.

=> Additionally or alternatively, based on a back-off counter becoming 0 in an SCH where back-off is performed in one Channel Subset, a channel for which a second type CCA may be performed may be applied only to other SCH(s) in the identical Channel Subset. This may be identically applied to other Channel Subsets.

Additionally or alternatively, maximum Bandwidth information for transmitting a frame/PPDU on the SCH may be obtained from a management frame (for example, Beacon) transmitted by an AP. Based on the STA performing the SCA being the AP, the AP may use information transmitted by itself (maximum Bandwidth information for transmitting the frame/PPDU).

Additionally or alternatively, a Threshold for a first type CCA or a second type CCA for determining whether a channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

Additionally or alternatively, a Timer may be operated for one or more SCHs performing the back-off. The Timer is operated from the start of the back-off, and based on any frame transmission or reception not being successfully performed during a time until this Timer expires, switching to an SCH of an identical or different channel subset to perform back-off or switching to the PCH may be performed.

In the present disclosure, a STA receiving a frame transmitted through the SCA may perform frame detection on the SCH even during the time when the NAV is set in the PCH. For example, the STA may perform the back-off on the SCH based on having a frame to transmit, or may attempt reception to check if there is a frame addressed to itself on the SCA even based on having no frame to transmit. Additionally, the STA may perform NAV setting/resetting based on a value of a duration/ID field of a frame detected on the SCH.

Additionally or alternatively, information on whether a frame/PPDU reception on the SCH is possible and information on one or more SCHs performing the back-off when possible may be obtained from the management frame (for example, Beacon) transmitted by the AP. Based on the STA performing the SCA being the AP, the AP may use information transmitted by itself (information on whether the frame/PPDU reception is possible and information on one or more SCHs performing the back-off when possible).

Additionally or alternatively, the information on one or more SCHs performing the back-off may be transmitted based on a Channel Subset obtained by dividing a bandwidth of an entire BSS Operating channel by a predetermined unit (for example, 40MHz/80MHz). For example, an SCH to perform the back-off in each divided Channel Subset is determined and transmitted. There may be no SCH performing the back-off in a Channel Subset. For example, the SCH to perform the back-off in each divided Channel Subset is determined and transmitted. An SCH to perform the back-off at an identical location in the Channel Subset is determined.

Additionally or alternatively, the Threshold for the first type CCA or the second type CCA for determining whether the channel on the SCH is BUSY/IDLE (determined as BUSY based on measured power exceeding the Threshold) may be obtained from the management frame (for example, Beacon) transmitted by the AP. Based on the STA performing the SCA being the AP, the AP may use information transmitted by itself (the Threshold for the first type CCA and the second type CCA for determining whether the channel on the SCH is BUSY/IDLE).

Additionally or alternatively, a Timer may be operated for one or more SCHs performing the back-off. The Timer is operated from the start of the back-off, and based on any frame transmission or reception not being successfully performed during a time until this Timer expires, switching to an SCH of an identical or different channel subset to perform back-off or switching to the PCH may be performed.

A PPDU through which a signal in this specification is transmitted/received may include a data field.

The data field includes user data and may include a packet for an upper layer. For example, it may include an MPDU (MAC Frame).

For example, based on supporting a channel access operation on a secondary channel, a duration/ID field in a MAC header included in the MPDU may be set to a value including a time length of a frame exchange following a frame or PPDU transmitted excluding or puncturing the PCH. For example, a TXOP termination timing determined based on the value of the duration/ID field may be set to be before a termination timing of a NAV set on the primary channel.

Also, as in FIG. 1, a transmitting apparatus and a receiving apparatus may respectively include a memory, a processor and a transceiver.

The memory may store information regarding a plurality of Secondary Channel Accesses described in this specification.

The processor may perform back-off in a Secondary Channel based on information stored in the memory, generate various RUs (Resource Units), and configure a PPDU. The processor may be configured to perform all/part of the <STA Operation Procedures for SCA #1>, <STA Operation Procedures for SCA #2>, <STA Operation Procedures for SCA #3>, <STA Operation Procedures for SCA #4> described in this specification.

In particular, a transceiver 113 of the transmitting apparatus includes an antenna and may perform analog signal processing. Specifically, a processor 111 may control the transceiver 113 to transmit the PPDU generated by the processor 111.

Alternatively, the processor 111 may generate a transmission PPDU and store information on the transmission PPDU in a memory 112.

For example, the processor 111 of the transmitting apparatus may be configure to perform an operation of a transmitting STA according to an example of the present disclosure. For example, the processor 111 may be configure to transmit a frame through the transceiver 113 on an SCH during a time when a NAV is set in the PCH. For example, the processor 111 may be configure to perform back-off on the SCH through the transceiver 113 and determine one or more SCHs in an IDLE state. For example, the processor 111 may be configure to transmit a frame/PPDU excluding or puncturing the PCH on one or more SCHs through the transceiver 113. Additionally or alternatively, the processor 111 may be configure to generate a frame including a duration/ID field set to a value such that a TXOP starting with the frame/PPDU transmission on the SCH terminates before a timing when the NAV on the PCH terminates.

Additionally, a transceiver 123 of the receiving apparatus may receive a PPDU based on control of a processor 121. For example, the transceiver 123 may include at least one receiving antenna and a filter for the receiving antenna.

The PPDU received through the transceiver 123 may be stored in a memory 122. The processor 121 may process decoding for the received PPDU through the memory 122. The processor 121 obtains control information (e.g., SIG) regarding BW/Tone-Plan/RU included in the PPDU and may store the obtained control information in the memory 122.

The processor 121 may perform decoding for the received PPDU and process the decoded data. For example, the processor 121 may perform a processing operation of delivering information regarding a decoded data field to an upper layer (e.g., MAC layer). Also, based on generation of a signal being indicated from the upper layer to a PHY layer in response to data delivered to the upper layer, a subsequent operation may be performed.

For example, the processor parses a MAC PDU obtained through PHY decoding of a DATA field of the PPDU received through the transceiver.

For example, the processor 121 of the receiving apparatus may be configure to perform an operation of a receiving STA according to an example of the present disclosure. For example, the processor 121 may attempt frame detection on the SCH through the transceiver 123 during the time when the NAV is set on the PCH. The processor 121 may be configure to decode/parse a frame addressed to itself based on the frame received on the SCH. Also, the processor 121 may be configure to set/reset a NAV according to a value of a duration/ID field of a frame not addressed to itself.

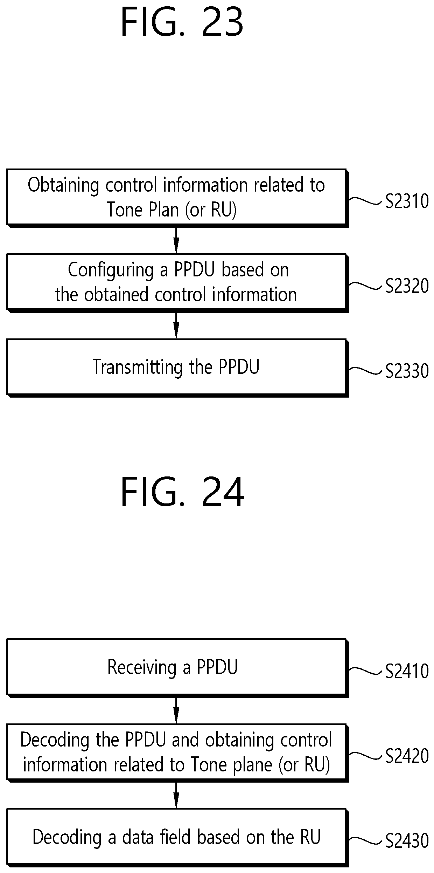

FIG. 23 is a flowchart illustrating the operation of a transmitting device according to the present embodiment.

The example of FIG. 23 may be performed by a transmitting device (AP and/or non-AP STA).

Some of each step (or detailed sub-step to be described later) of the example of FIG. 23 may be skipped/omitted.

Through step S2310, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2320, the transmitting device may construct/generate a PPDU based on the acquired control information. Configuring/generating the PPDU may include configuring/generating each field of the PPDU. That is, step S2320 includes configuring the EHT-SIG field including control information about the tone plan. That is, step S2320 includes configuring a field including control information (e.g., N bitmap) indicating the size/position of the RU; and/or configuring a field including an identifier of an STA receiving the RU (e.g., AID).

Also, step S2320 may include generating an STF/LTF sequence transmitted through a specific RU. The STF/LTF sequence may be generated based on a preset STF generation sequence/LTF generation sequence.

Also, step S2320 may include generating a data field (i.e., MPDU) transmitted through a specific RU.

The transmitting device may transmit the PPDU constructed through step S2320 to the receiving device based on step S2330.

While performing step S2330, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 24 is a flowchart illustrating the operation of the receiving apparatus/device according to the present embodiment.

The aforementioned PPDU may be received according to the example of FIG. 24.

The example of FIG. 24 may be performed by a receiving apparatus/device (AP and/or non-AP STA).

Some of each step (or detailed sub-step to be described later) of the example of FIG. 24 may be skipped/omitted.

The receiving device (receiving STA) may receive all or part of the PPDU through step S2410. The received signal may be in the form of FIG. 5.

A sub-step of step S2410 may be determined based on step S2330 of FIG. 23. That is, in step S2410, an operation of restoring the result of the CSD, Spatial Mapping, IDFT/IFFT operation, and GI insertion operation applied in step S2330 may be performed.

In step S2420, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2430, the receiving device may decode the remaining part of the PPDU based on information about the tone plan (i.e., RU) acquired through step S2420. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2430 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 24.

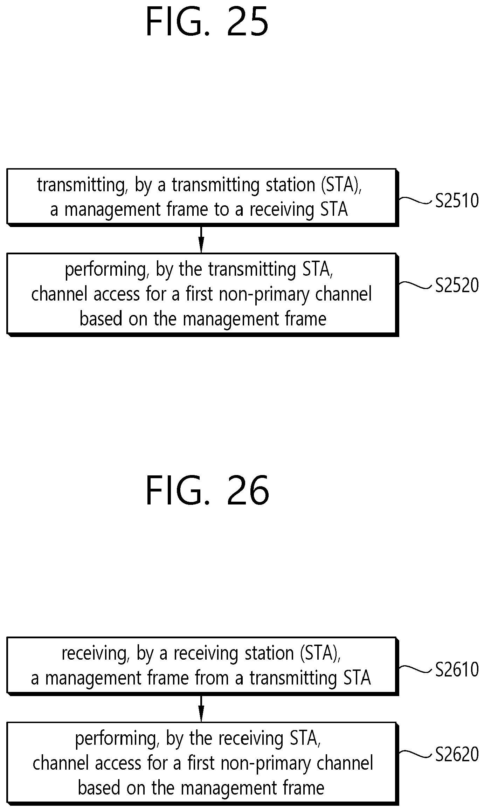

FIG. 25 is a flowchart illustrating a procedure in which a transmitting STA accesses a non-primary channel and receives a PPDU according to the present embodiment.

The example of FIG. 25 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 25 is performed by a transmitting station (STA), and the transmitting STA may correspond to an access point (AP). The receiving STA in FIG. 25 may correspond to at least one station (STA).

The present embodiment proposes a method for performing channel access for a non-primary channel by delivering information on the non-primary channel through a management frame. Specifically, the present embodiment proposes a method for determining a non-primary channel that is a candidate for performing Non-Primary Channel Access (NPCA) by delivering information on a location of a non-primary channel within a channel subset, a channel subset including a non-primary channel for which back-off is performed for the first time and a back-off order for each channel subset, and a timer indicating a timing for switching to another non-primary channel based on transmission or reception failing for the non-primary channel, etc.

In step S2510, a transmitting station (STA) transmits a management frame to a receiving STA.

In step S2520, the transmitting STA performs channel access for a first non-primary channel based on the management frame.

The management frame includes first and second information.

The first information is information on a size of a channel subset dividing a bandwidth of a Basic Service Set (BSS) operation channel of the transmitting STA (Channel Subset Unit).

For example, based on the first information being configured with 2 bits, based on the first information being set to 0, it indicates that there is no channel subset; based on the first information being set to 1, it indicates that the channel subset is 40MHz; based on the first information being set to 2, it indicates that the channel subset is 80MHz; and based on the first information being set to 3, it indicates that the channel subset is 160MHz.

The second information is information on a location of the first non-primary channel which is a reference for performing the channel access within one channel subset (Secondary Channel Access Channels). The second information may be configured as a bitmap consisting of bits corresponding to each 20MHz channel within the one channel subset, or may be indicated as an index for the each 20MHz channel within the one channel subset. At this time, a size of the bitmap may be determined based on the first information.

For example, based on the channel subset being indicated as 80MHz based on the first information, since the bitmap consists of bits corresponding to each 20MHz channel, it may be a 4-bit bitmap. Based on a non-primary channel serving as a reference for performing channel access within the channel subset being a last 20MHz channel (i.e., a fourth 20MHz channel in an 80MHz subset), the 4-bit bitmap may be set to 0001. For example, the bitmap may be configured in an order from a 20MHz channel of a low frequency to a 20MHz channel of a high frequency (or vice versa). Based on the second information being indicated as an index, based on the second information being set to 0, a non-primary channel within the channel subset may be indicated as a first 20MHz channel; based on the second information being set to 1, a non-primary channel within the channel subset may be indicated as a second 20MHz channel; based on the second information being set to 2, a non-primary channel within the channel subset may be indicated as a third 20MHz channel; and based on the second information being set to 3, a non-primary channel within the channel subset may be indicated as a fourth 20MHz channel.

The location of the first non-primary channel which is the reference for performing the channel access is identically determined for each channel subset based on the first and second information.

The management frame may be a Beacon, a Probe response frame, or a (Re)Association response frame.

For example, the present embodiment proposes a method for determining a non-primary channel within a channel subset based on information on the non-primary channel delivered through a management frame and performing channel access for the non-primary channel. Accordingly, STAs performing NPCA may efficiently use a medium or a channel by performing back-off based on a non-primary channel delivered through the management frame among a plurality of non-primary channel candidates to obtain a TXOP.

The transmitting STA (or the receiving STA) may perform back-off for the first non-primary channel. Based on a back-off value for the first non-primary channel being 0, the transmitting STA (or the receiving STA) may perform channel access for a second non-primary channel. The transmitting STA (or the receiving STA) may transmit or receive a Physical Protocol Data Unit (PPDU) through an IDLE channel among the first and second non-primary channels.

The first non-primary channel may be a secondary 20MHz channel capable of performing the back-off while a Network Allocation Vector (NAV) is set in a primary 20MHz channel. The second non-primary channel may be a remaining secondary channel excluding the first non-primary channel in a Basic Service Set (BSS) operating channel.

Additionally, the management frame may further include third information.

The third information may be information on a location of a channel subset including the first non-primary channel for which the transmitting STA or the receiving STA performs the back-off for the first time (First Secondary Access Channel).

The third information may be configured as a bitmap consisting of bits corresponding to each channel subset within a bandwidth of the BSS operating channel of the transmitting STA, or may be indicated as an index for the each channel subset within the bandwidth of the BSS operating channel of the transmitting STA. At this time, a size of the bitmap may be determined based on the first information.

For example, based on the bandwidth of the BSS operating channel of the transmitting STA being 320MHz and the channel subset being indicated as 80MHz based on the first information, the bitmap may be a 4-bit bitmap.

Based on a third channel subset within the bandwidth of the BSS operating channel of the transmitting STA including the first non-primary channel for which the back-off is performed for the first time, the 4-bit bitmap may be set to 0010. For example, the bitmap may be configured in an order from a low frequency channel subset to a high frequency channel subset (or vice versa). Based on the second information being indicated as an index, based on the second information being set to 0, it may be indicated that a first channel subset within the bandwidth of the BSS operating channel of the transmitting STA includes the first non-primary channel for which the back-off is performed for the first time; based on the second information being set to 1, it may be indicated that a second channel subset within the bandwidth of the BSS operating channel of the transmitting STA includes the first non-primary channel for which the back-off is performed for the first time; based on the second information being set to 2, it may be indicated that a third channel subset within the bandwidth of the BSS operating channel of the transmitting STA includes the first non-primary channel for which the back-off is performed for the first time; and based on the second information being set to 3, it may be indicated that a fourth channel subset within the bandwidth of the BSS operating channel of the transmitting STA includes the first non-primary channel for which the back-off is performed for the first time.

The management frame may further include fourth and fifth information.

The fourth information may be information on a back-off order for a channel subset within the bandwidth of the BSS operating channel of the transmitting STA (Secondary Channel Access Order).

The fifth information may be information on a timer during which the channel access for the first non-primary channel is performed (SCH Access Timer).

The transmitting STA (or the receiving STA) may determine a channel subset including the first non-primary channel for which the back-off is performed for the first time based on the third information.

Based on performing the back-off for the first non-primary channel and failing to transmit or receive a frame, the transmitting STA (or the receiving STA) may determine a next channel subset according to the back-off order based on the fourth information.

The transmitting STA (or the receiving STA) may re-perform back-off for a first non-primary channel within the next channel subset after the timer expires based on the fifth information.

FIG. 26 is a flowchart illustrating a procedure in which a receiving STA accesses a non-primary channel and transmits a PPDU according to the present embodiment.

The example of FIG. 26 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 26 is performed by a receiving station (STA), and the receiving STA may correspond to at least one STA. The transmitting STA in FIG. 26 may correspond to an access point (AP).

The present embodiment proposes a method for performing channel access for a non-primary channel by delivering information on the non-primary channel through a management frame. Specifically, the present embodiment proposes a method for determining a non-primary channel that is a candidate for performing Non-Primary Channel Access (NPCA) by delivering information on a location of a non-primary channel within a channel subset, a channel subset including a non-primary channel for which back-off is performed for the first time and a back-off order for each channel subset, and a timer indicating a timing for switching to another non-primary channel based on transmission or reception failing for the non-primary channel, etc.

In step S2610, a receiving station (STA) receives a management frame from a transmitting STA.

In step S2620, the receiving STA performs channel access for a first non-primary channel based on the management frame.

The management frame includes first and second information.

The first information is information on a size of a channel subset dividing a bandwidth of a Basic Service Set (BSS) operation channel of the transmitting STA (Channel Subset Unit).

For example, based on the first information being configured with 2 bits, based on the first information being set to 0, it indicates that there is no channel subset; based on the first information being set to 1, it indicates that the channel subset is 40MHz; based on the first information being set to 2, it indicates that the channel subset is 80MHz; and based on the first information being set to 3, it indicates that the channel subset is 160MHz.

The second information is information on a location of the first non-primary channel which is a reference for performing the channel access within one channel subset (Secondary Channel Access Channels). The second information may be configured as a bitmap consisting of bits corresponding to each 20MHz channel within the one channel subset, or may be indicated as an index for the each 20MHz channel within the one channel subset. At this time, a size of the bitmap may be determined based on the first information.

For example, based on the channel subset being indicated as 80MHz based on the first information, since the bitmap consists of bits corresponding to each 20MHz channel, it may be a 4-bit bitmap. Based on a non-primary channel serving as a reference for performing channel access within the channel subset being a last 20MHz channel (i.e., a fourth 20MHz channel in an 80MHz subset), the 4-bit bitmap may be set to 0001. For example, the bitmap may be configured in an order from a 20MHz channel of a low frequency to a 20MHz channel of a high frequency (or vice versa). Based on the second information being indicated as an index, based on the second information being set to 0, a non-primary channel within the channel subset may be indicated as a first 20MHz channel; based on the second information being set to 1, a non-primary channel within the channel subset may be indicated as a second 20MHz channel; based on the second information being set to 2, a non-primary channel within the channel subset may be indicated as a third 20MHz channel; and based on the second information being set to 3, a non-primary channel within the channel subset may be indicated as a fourth 20MHz channel.

The location of the first non-primary channel which is the reference for performing the channel access is identically determined for each channel subset based on the first and second information.

The management frame may be a Beacon, a Probe response frame, or a (Re)Association response frame.

For example, the present embodiment proposes a method for determining a non-primary channel within a channel subset based on information on the non-primary channel delivered through a management frame and performing channel access for the non-primary channel. Accordingly, STAs performing NPCA may efficiently use a medium or a channel by performing back-off based on a non-primary channel delivered through the management frame among a plurality of non-primary channel candidates to obtain a TXOP.

The transmitting STA (or the receiving STA) may perform back-off for the first non-primary channel. Based on a back-off value for the first non-primary channel being 0, the transmitting STA (or the receiving STA) may perform channel access for a second non-primary channel. The transmitting STA (or the receiving STA) may transmit or receive a Physical Protocol Data Unit (PPDU) through an IDLE channel among the first and second non-primary channels.

The first non-primary channel may be a secondary 20MHz channel capable of performing the back-off while a Network Allocation Vector (NAV) is set in a primary 20MHz channel. The second non-primary channel may be a remaining secondary channel excluding the first non-primary channel in a Basic Service Set (BSS) operating channel.

Additionally, the management frame may further include third information.

The third information may be information on a location of a channel subset including the first non-primary channel for which the transmitting STA or the receiving STA performs the back-off for the first time (First Secondary Access Channel).

The third information may be configured as a bitmap consisting of bits corresponding to each channel subset within a bandwidth of the BSS operating channel of the transmitting STA, or may be indicated as an index for the each channel subset within the bandwidth of the BSS operating channel of the transmitting STA. At this time, a size of the bitmap may be determined based on the first information.

For example, based on the bandwidth of the BSS operating channel of the transmitting STA being 320MHz and the channel subset being indicated as 80MHz based on the first information, the bitmap may be a 4-bit bitmap.

Based on a third channel subset within the bandwidth of the BSS operating channel of the transmitting STA including the first non-primary channel for which the back-off is performed for the first time, the 4-bit bitmap may be set to 0010. For example, the bitmap may be configured in an order from a low frequency channel subset to a high frequency channel subset (or vice versa). Based on the second information being indicated as an index, based on the second information being set to 0, it may be indicated that a first channel subset within the bandwidth of the BSS operating channel of the transmitting STA includes the first non-primary channel for which the back-off is performed for the first time; based on the second information being set to 1, it may be indicated that a second channel subset within the bandwidth of the BSS operating channel of the transmitting STA includes the first non-primary channel for which the back-off is performed for the first time; based on the second information being set to 2, it may be indicated that a third channel subset within the bandwidth of the BSS operating channel of the transmitting STA includes the first non-primary channel for which the back-off is performed for the first time; and based on the second information being set to 3, it may be indicated that a fourth channel subset within the bandwidth of the BSS operating channel of the transmitting STA includes the first non-primary channel for which the back-off is performed for the first time.

The management frame may further include fourth and fifth information.

The fourth information may be information on a back-off order for a channel subset within the bandwidth of the BSS operating channel of the transmitting STA (Secondary Channel Access Order).

The fifth information may be information on a timer during which the channel access for the first non-primary channel is performed (SCH Access Timer).

The transmitting STA (or the receiving STA) may determine a channel subset including the first non-primary channel for which the back-off is performed for the first time based on the third information.

Based on performing the back-off for the first non-primary channel and failing to transmit or receive a frame, the transmitting STA (or the receiving STA) may determine a next channel subset according to the back-off order based on the fourth information.

The transmitting STA (or the receiving STA) may re-perform back-off for a first non-primary channel within the next channel subset after the timer expires based on the fifth information.

### < Device configuration>

The technical features of this specification described above may be applied to various devices and methods. For example, the technical features of this specification described above may be performed/supported through the device of FIG. 1 and/or FIG. 14. For example, the technical features of this specification described above may be applied to only a part of FIG. 1 and/or FIG. 14. For example, the technical features of this specification described above may be implemented based on the processing chips (114 and 124) of FIG. 1, implemented based on the processors (111 and 121) and the memories (112 and 122) of FIG. 1, or implemented based on the processor (610) and the memory (620) of FIG. 14. For example, the device of this specification receives a management frame from a transmitting station (STA); and performs channel access for a first non-primary channel based on the management frame.

The technical features of this specification may be implemented based on a computer readable medium (CRM). For example, the CRM proposed by this specification is at least one computer readable medium (CRM) including instructions based on being executed by at least one processor.

The CRM may store instructions for performing operations including: receiving a management frame from a transmitting station (STA); and performing channel access for a first non-primary channel based on the management frame. The instructions stored in the CRM of this specification may be executed by at least one processor. At least one processor related to the CRM of this specification may be the processors (111 and 121) or processing chips (114 and 124) of FIG. 1, or the processor (610) of FIG. 14. Meanwhile, the CRM of this specification may be the memories (112 and 122) of FIG. 1, the memory (620) of FIG. 14, or a separate external memory/storage medium/disk, etc.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a receiving station (STA), a management frame from a transmitting STA; and
performing, by the receiving STA, channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.

2. The method of claim 1, wherein the second information is configured as a bitmap consisting of bits corresponding to each 20MHz channel within the one channel subset or is indicated as an index for the each 20MHz channel within the one channel subset, and
wherein a size of the bitmap is determined based on the first information.

3. The method of claim 1, further comprising:
performing, by the receiving STA, back-off for the first non-primary channel,
wherein the first non-primary channel is a secondary 20MHz channel capable of performing the back-off while a Network Allocation Vector (NAV) is set in a primary 20MHz channel.

4. The method of claim 3, wherein the management frame further includes third information,
wherein the third information is information on a location of a channel subset including the first non-primary channel for which the transmitting STA or the receiving STA performs the back-off for the first time,
wherein the third information is configured as a bitmap consisting of bits corresponding to each channel subset within a bandwidth of the BSS operating channel of the transmitting STA or is indicated as an index for the each channel subset within the bandwidth of the BSS operating channel of the transmitting STA, and
wherein a size of the bitmap is determined based on the first information.

5. The method of claim 4, wherein the management frame further includes fourth and fifth information,
wherein the fourth information is information on a back-off order for a channel subset within the bandwidth of the BSS operating channel of the transmitting STA, and
wherein the fifth information is information on a timer during which the channel access for the first non-primary channel is performed.

6. The method of claim 5, further comprising:
determining, by the receiving STA, a channel subset including the first non-primary channel for which the back-off is performed for the first time based on the third information;
determining, by the receiving STA, a next channel subset according to the back-off order based on the fourth information, based on performing the back-off for the first non-primary channel and failing to transmit or receive a frame; and
re-performing, by the receiving STA, back-off for a first non-primary channel within the next channel subset after the timer expires based on the fifth information.

7. The method of claim 3, further comprising:
performing, by the receiving STA, channel access for a second non-primary channel based on a back-off value for the first non-primary channel being 0; and
transmitting or receiving, by the receiving STA, a Physical Protocol Data Unit (PPDU) through an IDLE channel among the first and second non-primary channels,
wherein the second non-primary channel is a remaining secondary channel excluding the first non-primary channel in the BSS operating channel of the transmitting STA.

8. A receiving station (STA) in a wireless local area network (WLAN) system, the receiving STA comprising:
a memory;
a transceiver; and
a processor being operatively connected to the memory and the transceiver,
wherein the processor is configured to:
receive a management frame from a transmitting STA; and
perform channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.

9. A method in a wireless local area network (WLAN) system, the method comprising:
transmitting, by a transmitting station (STA), a management frame to a receiving STA; and
performing, by the transmitting STA, channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.

10. The method of claim 9, wherein the second information is configured as a bitmap consisting of bits corresponding to each 20MHz channel within the one channel subset or is indicated as an index for the each 20MHz channel within the one channel subset, and
wherein a size of the bitmap is determined based on the first information.

11. The method of claim 9, further comprising:
performing, by the transmitting STA, back-off for the first non-primary channel,
wherein the first non-primary channel is a secondary 20MHz channel capable of performing the back-off while a Network Allocation Vector (NAV) is set in a primary 20MHz channel.

12. The method of claim 11, wherein the management frame further includes third information,
wherein the third information is information on a location of a channel subset including the first non-primary channel for which the transmitting STA or the receiving STA performs the back-off for the first time,
wherein the third information is configured as a bitmap consisting of bits corresponding to each channel subset within a bandwidth of the BSS operating channel of the transmitting STA or is indicated as an index for the each channel subset within the bandwidth of the BSS operating channel of the transmitting STA, and
wherein a size of the bitmap is determined based on the first information.

13. The method of claim 12, wherein the management frame further includes fourth and fifth information,
wherein the fourth information is information on a back-off order for a channel subset within the bandwidth of the BSS operating channel of the transmitting STA, and
wherein the fifth information is information on a timer during which the channel access for the first non-primary channel is performed.

14. The method of claim 13, further comprising:
determining, by the transmitting STA, a channel subset including the first non-primary channel for which the back-off is performed for the first time based on the third information;
determining, by the transmitting STA, a next channel subset according to the back-off order based on the fourth information, based on performing the back-off for the first non-primary channel and failing to transmit or receive a frame; and
re-performing, by the transmitting STA, back-off for a first non-primary channel within the next channel subset after the timer expires based on the fifth information.

15. The method of claim 11, further comprising:
performing, by the transmitting STA, channel access for a second non-primary channel based on a back-off value for the first non-primary channel being 0; and
transmitting or receiving, by the transmitting STA, a Physical Protocol Data Unit (PPDU) through an IDLE channel among the first and second non-primary channels,
wherein the second non-primary channel is a remaining secondary channel excluding the first non-primary channel in the BSS operating channel of the transmitting STA.

16. A transmitting station (STA) in a wireless local area network (WLAN) system, the transmitting STA comprising:
a memory;
a transceiver; and
a processor being operatively connected to the memory and the transceiver,
wherein the processor is configured to:
transmit a management frame to a receiving STA; and
perform channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.

17. A computer readable medium including an instruction being executed by at least one processor and performing a method comprising the steps of:
receiving a management frame from a transmitting station (STA); and
performing channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.

18. A device in a wireless local area network (WLAN) system, the device comprising:
a memory; and
a processor being operatively connected to the memory,
wherein the processor is configured to:
receive a management frame from a transmitting station (STA); and
perform channel access for a first non-primary channel based on the management frame,
wherein the management frame includes first and second information,
wherein the first information is information on a size of a channel subset dividing a bandwidth of a Basic Service Set (BSS) operation channel of the transmitting STA,
wherein the second information is information on a location of the first non-primary channel which is a reference for performing the channel access within one channel subset, and
wherein the location of the first non-primary channel which is the reference for performing the channel access is identically determined for each channel subset based on the first and second information.
